# EUROPÄISCHE PATENTSCHRIFT

(11) **EP 2 005 009 B1**
(45) Veröffentlichungstag und Bekanntmachung des Hinweises auf die Patenterteilung: **19.06.2013**
(21) Anmeldenummer: 07723238.7
(22) Anmeldetag: 14.03.2007
(51) Int. Cl.: F15B 15/14, F16F 9/32

(54) **VORRICHTUNG ZUR ÜBERWACHUNG UND/ODER REGELUNG DER BEWEGUNG EINER FLUIDISCHEN KOMPONENTE IN EINEM FLUIDISCHEN SYSTEM**
DEVICE FOR MONITORING AND/OR REGULATING THE MOVEMENT OF A FLUIDIC COMPONENT IN A FLUIDIC SYSTEM
DISPOSITIF DE SURVEILLANCE ET/OU DE RÉGLAGE DU MOUVEMENT D'UN COMPOSANT FLUIDE DANS UN SYSTÈME FLUIDE

(30) Priorität: 08.04.2006 DE 102006016709
(43) Veröffentlichungstag der Anmeldung: 24.12.2008
(73) Patentinhaber: FESTO AG & Co. KG, 73734 Esslingen (DE)
(72) Erfinder: GEBHARD, Ute, 73734 Esslingen (DE)
(74) Vertreter: Kocher, Mark Werner
(86) Internationale Anmeldenummer: PCT/EP2007/002228
(87) Internationale Veröffentlichungsnummer: WO 2007/115631

(56) Entgegenhaltungen:
- EP-A- 1 204 009
- EP-A- 1 271 105
- EP-A1- 0 643 291
- DE-A1- 19 915 260
- US-A1- 2001 037 724

## Beschreibung

Die Erfindung betrifft eine Vorrichtung zur Überwachung und/oder Regelung der Bewegung einer fluidischen Komponente in einem fluidischen System, mit einer bewegbaren fluidischen Komponente (11, 12) und mit einem Beschleunigungssensor, der an oder in der als Kolben oder eine Kolbenstange eines Dämpfungs- oder Arbeitszylinders ausgebildeten bewegbaren fluidischen Komponente angeordnet ist, mit einer drahtlosen Signal-übertragungseinrichtung, die zur drahtlosen Datenübertragung zwischen dem Beschleunigungssensor und einer ortsfesten Station vorgesehen ist und mit einer Signalverarbeitungseinrichtung, die mit der ortsfesten Station verbunden oder in dieser integriert ist und zur Regelung und/oder Überwachung der Bewegung der bewegbaren fluidischen Komponente in Abhängigkeit der Signale des Beschleunigungssensors ausgebildet ist.

Aus der DE 19915260 A1 ist ein Linearantrieb bekannt, an dessen Gehäuse ein Beschleunigungssensor montiert ist. Dieser soll dazu dienen, die Auftreffgeschwindigkeit des Kolbens auf den Anschlag zu erfassen. Mit der bekannten Anordnung kann jedoch lediglich das Auftreffen auf den Anschlag erfasst werden, nicht dagegen der übrige Bewegungsablauf des Kolbens. Daher kann lediglich dieses Auftreffen überwacht werden.

Die EP 1204009 A2 offenbart ein Verfahren zum Betrieb von zumindest einer Bewegungseinheit, bei dem in einem Initialisierungsmodus der Bewegungseinheit zumindest ein aktueller Soll-Wert, wie ein Weg, eine Beschleunigung, eine Verzögerung des Kolbens oder Schlittens festgelegt wird, worauf Ist-Werte ermittelt und mit den aktuellen Soll-Werten verglichen werden und bei einer Abweichung des Ist-Wertes vom aktuellen Soll-Wert die Ist-Werte des Kolbens und/ oder Schlittens der Bewegungseinheit durch Beaufschlagung über die Schaltmodule solange verändert werden, bis die aktuellen Soll-Werte erreicht werden und wobei ein potentieller Soll-Wert von zumindest einem Basisparameter wie Verfahrweg in x- und/oder y-Richtung, Geschwindigkeit, Kraft oder Position eines Kolbens oder Schlittens vordefiniert und in Form von Daten oder eines Programmes gespeichert wird und mit dem aktuellen Soll-Wert verglichen wird, und der aktuelle Soll-Wert nur dann abgespeichert wird, wenn der aktuelle Soll-Wert innerhalb des potentiellen Soll-Wertes liegt.

Die EP 1271105 A2 betrifft eine Vorrichtung zur Umwandlung von Messsignalen, die durch während der Schlagvorgänge eines hydraulischen Schlagaggregats auf einen Piezo-Sensor einwirkende Beschleunigungen in diesem ausgelöst werden und aus denen die Anzahl der in Schlagrichtung des Schlagaggregats ausgeführten Arbeitshübe ermittelt werden kann, in für die Verarbeitung in einem Mikroprozessor geeignete Digital-Signale.

Aus der EP 0643291 A1 ist eine Vorrichtung zum Bestimmen des Drucks im Brennraum eines Hubkolben-Motors bekannt bei der Mittel zum Messen von Druckkraft und/oder Zugkraft an einem vom Kolben angetriebenen Bauteil des Motors und zum Ermitteln der Druckwerte im Brennraum aufgrund von an dem bewegten Motorteil in Richtung der Bewegung des Kolbens ermittelten Druckkraftwerten vorgesehen sind und wobei den Druckkraftwerten entsprechende elektrischen Signale erzeugt werden.

Eine Aufgabe der vorliegenden Erfindung besteht darin, eine Vorrichtung zu schaffen, durch die Beschleunigungen beziehungsweise Verzögerungen während des gesamten Bewegungsablaufs zuverlässig erfasst und übertragen werden können, um den gesamten Bewegungsablauf überwachen oder gar regeln zu können.

Diese Aufgabe wird erfindungsgemäß dadurch gelöst, dass der Beschleunigungssensor zusammen mit einem Mikrocontroller zur Aufbereitung und/oder Digitalisierung der Sensordaten in einem Sensormodul angeordnet ist.

Da der Beschleunigungssensor mit der bewegbaren fluidischen Komponente mitbewegt wird und seine Sensorsignale ständig oder in bestimmten Zeitintervallen drahtlos an die ortsfeste Station übertragen kann, kann der gesamte Bewegungsablauf hinsichtlich seiner Beschleunigungen beziehungsweise Verzögerungen überwacht werden. Dies ermöglicht eine vollständige Diagnose des Bewegungsablaufs, wobei auch eine Regelung auf ein vorgegebenes Beschleunigungsprofil ermöglicht wird. Durch die in den Unteransprüchen aufgeführten Maßnahmen sind vorteilhafte Weiterbildungen und Verbesserungen der im Anspruch 1 angegebenen Vorrichtung möglich.

Der Beschleunigungssensor ist in vorteilhafter Weise zusammen mit dem Mikrocontroller zur Aufbereitung und/oder Digitalisierung der Sensordaten im Sensormodul angeordnet, in dem auch noch der Transducer zur Datenübertragung enthalten ist, der vorzugsweise als Transponderelement ausgebildet ist. Entsprechend ist die ortsfeste Station als Lesegerät oder Schreib-/Lesegerät, vorzugsweise als Transponder-Lesegerät oder Transponder-Schreib-/Lesegerät ausgebildet.

In einer vorteilhaften konstruktiven Ausgestaltung ist das Sensormodul an oder in der bewegbaren fluidischen Komponente angeschraubt oder angeklemmt, wobei eine besonders kompakte und leicht zu montierende Anordnung dadurch erreicht wird, dass das Sensormodul in einer Schraube integriert ist, die lediglich in die bewegbare fluidische Komponente eingeschraubt werden muss.

Die ortsfeste Station ist zweckmäßigerweise auch zur Datenübertragung zum Sensormodul hin ausgebildet, um beispielsweise Parametrierungen und/oder Programmierungen desselben zu ermöglichen.

In einer zweckmäßigen Ausgestaltung ist ein Diagnose-Algorithmus im Sensormodul und/oder in der Signalverarbeitungseinrichtung enthalten, um direkt aus den ermittelten Beschleunigungsdaten eine Diagnose des Bewegungsablaufs zu erreichen.

In der Signalverarbeitungseinrichtung ist in vorteilhafter Weise ein Soll-Beschleunigungsverlauf der Bewegungen der bewegbaren fluidischen Komponente gespeichert, wobei Mittel zum Vergleich dieses Soll-Beschleunigungsverlaufs mit dem gemessenen Beschleunigungsverlauf vorgesehen sind. Dadurch kann der korrekte Ablauf der Bewegung überprüft werden, wobei Abweichungen über ein vorgebbares Maß hinaus eine Fehlermeldung auslösen können. Weiterhin kann auch eine Regelung des Bewegungsablaufs gemäß diesem Soll-Beschleunigungsverlauf durchgeführt werden. Hierzu ist in der Signalverarbeitungseinrichtung zweckmäßigerweise eine Regelungseinrichtung für die fluidische Komponente enthalten, die mit einer Ventilanordnung zur Beaufschlagung der fluidischen Komponente mit einem Fluid in Wirkverbindung steht oder die die pneumatische Ansteuerung einer Handhabungskomponente anspricht bzw. auslöst.

Zur Erzeugung der für seinen Betrieb erforderlichen elektrischen Energie ist im Sensormodul eine Spannungsquelle vorgesehen, wobei diese elektrische Energie vorzugsweise aus den von der ortsfesten Station übermittelten Signalen oder der Bewegungsenergie der bewegbaren fluidischen Komponente gewonnen wird. Als Energiespeicher kann beispielsweise ein Kondensator oder eine sonstige Speicherzelle dienen.

Ein Ausführungsbeispiel der Erfindung ist in der Zeichnung dargestellt und in der nachfolgenden Beschreibung näher erläutert. Es zeigen:
- Figur 1: ein als Arbeitszylinder ausgebildetes fluidisches System, dessen Kolben ein Sensormodul zur drahtlosen Datenübertragung besitzt, als Ausführungsbeispiel der Erfindung und
- Figur 2: eine Ausbildung des Sensormoduls als Schraube.

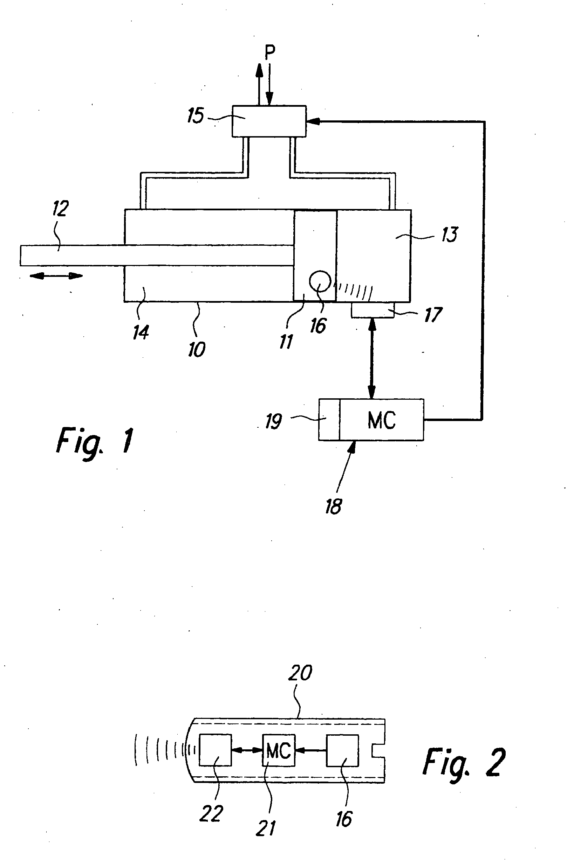

In Figur 1 ist als Beispiel für ein fluidisches System ein in einem Zylinder 10 bewegbarer Kolben 11 dargestellt. Dabei kann es sich um einen Arbeitszylinder, um einen Stoßdämpfer oder einen Linearantrieb handeln. Der mit einer Kolbenstange 12 versehene Kolben 11 teilt den Zylinder-Innenraum in zwei Kammern 13, 14 auf, die je nach der gewünschten Bewegungsrichtung des Kolbens 11 über eine Ventilanordnung 15 mit einem fluidischen Arbeitsdruck P beaufschlagbar sind. Bei diesem Fluid kann es sich um ein Gas, beispielsweise Luft, oder um ein Hydraulikmedium handeln. An der bewegbaren fluidischen Komponente, also am Kolben 11 (oder der Kolbenstange 12), ist ein Beschleunigungssensor 16 angebracht, beispielsweise angeklemmt oder im Inneren festgeklemmt oder in Form einer Schraube gemäß Figur 2 eingeschraubt.

Dieser Beschleunigungssensor 16 misst ständig die Beschleunigungswerte des sich bewegenden Kolbens 11 und übermittelt die Sensorsignale drahtlos an eine ortsfeste Station 17, die an der Außenseite des Zylinders 10 angebracht ist. Diese ortsfeste Station 17 kann sich prinzipiell auch an einer anderen Stelle des fluidischen Systems befinden oder außerhalb desselben, sofern die Reichweite für die drahtlose Übermittlung der Sensorsignale ausreichend ist.

Die ortsfeste Station 17 übermittelt die empfangenen Sensorsignale einer Signalverarbeitungseinrichtung 18, die als Überwachungs- und/oder Regelungseinrichtung ausgebildet sein kann. Im Falle der Ausbildung als Überwachungseinrichtung werden die empfangenen Sensorsignale ständig mit einem gespeicherten Beschleunigungsprofil verglichen, das beispielsweise zuvor bei einer entsprechenden Kolbenbewegung eingespeichert worden ist oder durch einen anderen Lernmodus erfasst wurde. Abweichungen der aktuell gemessenen Beschleunigungswerte während der Kolbenbewegung vom gespeicherten Profil deuten auf eine Fehlfunktion oder einen Verschleiß oder einen sonstigen Fehler hin. Abweichungen, die ein vorgebbares Maß übersteigen, führen daher zu einer Fehlermeldung, die akustisch oder visuell erzeugt werden kann. Die Fehlermeldung kann auch im Speicher 19 der Signalverarbeitungseinrichtung 18 abgelegt werden und/oder eine Aktion auslösen, wie eine Entlüftung oder den Aufbau eines Gegendrucks, wobei dieser Speicher 19 auch zur Speicherung von Beschleunigungsprofilen dienen kann. Die Überwachungs- und/oder Regelungsfunktionen werden beispielsweise durch einen Mikrocontroller MC der Signalverarbeitungseinrichtung 18 ausgeführt.

Im Falle der Ausbildung als Regelungseinrichtung ist eben-falls ein Beschleunigungsprofil als Soll-Beschleunigungsprofil im Speicher 19 gespeichert. Der Mikrocontroller MC dient dabei als Regler und wirkt in Abhängigkeit von Regelabweichungen auf die Ventilanordnung 15 ein, die beispielsweise als Proportionalregelventil ausgebildet ist oder ein solches enthält.

Die ortsfeste Station 17 kann zusammen mit der Signalverarbeitungseinrichtung 18 auch eine gemeinsame integrierte Baugruppe bilden. Ein Diagnose-Algorithmus und/oder ein Regelungs-Algorithmus sind dann in dieser gemeinsamen Baugruppe enthalten.

Gemäß Figur 2 ist der Beschleunigungssensor 16 in einem Sensormodul 20 in Form einer Gewindeschraube enthalten. Das Sensormodul 20 kann dann in einfacher Weise in den Kolben 11 oder in eine sonstige bewegbare fluidische Komponente eingeschraubt werden, deren Beschleunigungsverlauf erfasst werden soll. Im Sensormodul 20 ist der Beschleunigungssensor 16 mit einem Mikrocontroller 21 zur Aufbereitung und/oder Digitalisierung der Sensordaten verbunden. Der Mikrocontroller 21 gibt die Daten an ein Sendeelement 22 ab, das auch als Sende-/Empfangselement ausgebildet sein kann. Es dient zur drahtlosen Übertragung der gemessenen Beschleunigungswerte an die ortsfeste Station 17, die als Lesegerät für die drahtlos übermittelten Daten oder gegebenenfalls als Schreib-/Lesegerät ausgebildet sein kann, wenn sie ihrerseits auch Daten zum Sensormodul 20 senden soll, beispielsweise zur Parametrierung und/oder Programmierung desselben.

Das Sendeelement 22 ist beispielsweise als Transponder ausgebildet, wobei dann die ortsfeste Station 17 als Transponder-Lesegerät beziehungsweise Transponder-Schreib-/Lesegerät ausgebildet ist. Bei dem Transponderelement kann es sich beispielsweise um einen RFID-Transponder (Radio Frequency Identification) handeln. Das Transponderelement kann dabei ein aktiver oder passiver Transponder sein. Andere bekannte drahtlose Datenübertragungsvorrichtungen können ebenfalls zur Übertragung der Daten eingesetzt werden.

Zur Energieversorgung des Sensormoduls 20 können die empfangenen elektromagnetischen Wellen seitens der ortsfesten Station 17 in an sich bekannter Weise verwendet werden. Die Speicherung der zur Energieversorgung umgewandelten elektromagnetischen Wellen erfolgt dabei üblicherweise in einem Kondensator oder sonstigen Speicherelement. Alternativ hierzu kann auch die Bewegungsenergie des Kolbens 11 zur Gewinnung der erforderlichen Versorgungsenergie beziehungsweise Versorgungsspannung eingesetzt werden. Hierzu kann ein elektromechanischer Wandler oder eine induktive Vorrichtung eingesetzt werden.

Eventuell für eine Regelung der Bewegung des Kolbens 11 noch erforderliche zusätzliche Sensoren, wie z.B. Positionssensoren, sind zur Vereinfachung nicht dargestellt. Ihre Signale werden dabei ebenfalls der Signalverarbeitungseinrichtung 18 zugeführt.

Das Sensormodul 20 kann auch als dezentrale Diagnosekomponente ausgebildet sein, wobei dann Diagnose-Funktionen beziehungsweise -Algorithmen im Mikrocontroller 21 enthalten sind. Im Übrigen können die elektronischen Bestandteile des Sensormoduls 20, also der Beschleunigungssensor 16, der Mikrocontroller 21 und das Sendeelement 22, auf einer Leiterplatte angeordnet sein, wobei es sich um eine umspritzte oder in ein Kunststoff- oder Metallprofil integrierte Leiterplatte handeln kann. Sie kann auch als MID-Komponente (Moulded Interconnect Device) realisiert werden. Die Bestandteile des Sensormoduls 20 können dabei auch mit oder ohne Leiterplatte in einem Gehäuse untergebracht sein, das an der bewegbaren fluidischen Komponente angeklemmt, angeklebt oder in dieser eingelassen ist.

Anstelle auf eine Kolben-Zylinder-Anordnung kann die vorliegende Erfindung auch auf andere fluidische Systeme angewandt werden, in denen bewegbare fluidisch angesteuerte Komponenten vorhanden sind, deren Bewegungsablauf Beschleunigungen beziehungsweise Verzögerungen aufweisen. Hierzu zählen beispielsweise alle Arten von Antrieben, fluidisch angetriebene Arbeitsvorrichtungen, wie Greifarme, Roboter und dergleichen, sowie alle Arten von Stoßdämpfern oder sonstigen Dämpfungseinrichtungen. Die ausgeführten Bewegungen können linear und nicht linear sein, z.B. auch rotatorisch oder entlang beliebig programmierter Bewegungsbahnen verlaufen.

## Patentansprüche

1. Vorrichtung zur Überwachung und/oder Regelung der Bewegung einer fluidischen Komponente in einem fluidischen System, mit einer bewegbaren fluidischen Komponente (11, 12) und mit einem Beschleunigungssensor (16), der an oder in der als Kolben oder eine Kolbenstange eines Dämpfungs- oder Arbeitszylinders ausgebildeten bewegbaren fluidischen Komponente (11, 12) angeordnet ist, mit einer drahtlosen Signalübertragungseinrichtung, die zur drahtlosen Datenübertragung zwischen dem Beschleunigungssensor (16) und einer ortsfesten Station (17) vorgesehen ist, und mit einer Signalverarbeitungseinrichtung (18), die mit der ortsfesten Station (17) verbunden oder in dieser integriert ist, zur Regelung und/oder Überwachung der Bewegung der bewegbaren fluidischen Komponente (11, 12) in Abhängigkeit der Signale des Beschleunigungssensors (16) ausgebildet ist, **dadurch gekennzeichnet, dass** der Beschleunigungssensor zusammen mit einem Mikrocontroller (21) zur Aufbereitung und/oder Digitalisierung der Sensordaten in einem Sensormodul (20) angeordnet ist.

2. Vorrichtung nach Anspruch 1, **dadurch gekennzeichnet, dass** der Beschleunigungssensor (16) zusammen mit einem insbesondere als Transponderelement ausgebildeten Transducer zur Signalübertragung in einem Sensormodul (20) angeordnet ist, und dass die ortsfeste Station (17) als Lesegerät oder Schreib-/Lesegerät, insbesondere als Transponder-Lesergerät oder Transponder-Schreib-/Lesegerät ausgebildet ist.

3. Vorrichtung nach Anspruch 2, **dadurch gekennzeichnet, dass** das Sensormodul (20) an oder in der bewegbaren fluidischen Komponente (11, 12) angeschraubt oder angeklemmt ist.

4. Vorrichtung nach Anspruch 3, **dadurch gekennzeichnet, dass** das Sensormodul (20) als Schraube ausgebildet oder in einer Schraube integriert ist.

5. Vorrichtung nach einem der vorhergehenden Ansprüche, **dadurch gekennzeichnet, dass** die ortsfeste Station (17) auch zur Datenübertragung zum Sensormodul (20) hin ausgebildet ist, insbesondere zur Parametrierung und/oder Programmierung.

6. Vorrichtung nach einem der vorhergehenden Ansprüche, **dadurch gekennzeichnet, dass** ein Diagnose-Algorithmus im Sensormodul (20) und/oder in der Signalverarbeitungseinrichtung (18) enthalten ist.

7. Vorrichtung nach einem der vorhergehenden Ansprüche, **dadurch gekennzeichnet, dass** in der Signalverarbeitungseinrichtung ein Soll-Beschleunigungsverlauf der Bewegungen der fluidischen Komponente (11, 12) gespeichert ist, und dass Mittel zum Vergleich dieses Soll-Beschleunigungsverlaufs mit dem gemessenen Beschleunigungsverlauf vorgesehen sind.

8. Vorrichtung nach einem der vorhergehenden Ansprüche, **dadurch gekennzeichnet, dass** in der Signalverarbeitungseinrichtung (18) eine Regelungseinrichtung für die Bewegung der fluidischen Komponente (11, 12) enthalten ist, die mit einer Ventilanordnung (15) zur Beaufschlagung der fluidischen Komponente mit einem Fluid in Wirkverbindung steht.

9. Vorrichtung nach einem der vorhergehenden Ansprüche, **dadurch gekennzeichnet, dass** im Sensormodul (20) eine die für seinen Betrieb erforderliche elektrische Energie aus dem von der ortsfesten Station (17) übermittelten Signale oder der Bewegungsenergie der bewegbaren fluidischen Komponente (11, 12) gewonnene Spannungsquelle vorgesehen ist.

## Claims

1. Device for monitoring and/or controlling the movement of a fluidic component in a fluidic system, comprising a movable fluidic component (11, 12) and an acceleration sensor (16) which is located on or in the movable fluidic component (11, 12), which is designed as a piston or piston rod of a damping or operating cylinder, further comprising a wireless signal transmission device provided for wireless data transmission between the acceleration sensor (16) and a fixed station (17), and further comprising a signal processing device (18) connected to or integrated into the fixed station (17) for controlling and/or monitoring the movement of the movable fluidic component (11, 12) in dependence on the signals of the acceleration sensor (16), **characterised in that** the acceleration sensor together with a microcontroller (21) is located in a sensor module (20) for preparing and/or digitising the sensor data.

2. Device according to claim 1, **characterised in that** the acceleration sensor (16) together with a transducer which is in particular designed as a transponder element is located in a sensor module (20) for signal transmission, and **in that** the fixed station (17) is designed as a reading device or as a writing/reading device, in particular as a transponder reading device or as a transponder writing/reading device.

3. Device according to claim 2, **characterised in that** the sensor module (20) is bolted or clamped to the movable fluidic component (11, 12).

4. Device according to claim 3, **characterised in that** the sensor module (20) is designed as or integrated into a screw.

5. Device according to any of the preceding claims, **characterised in that** the fixed station (17) is also designed for data transmission to the sensor module (20), in particular for parameterisation and/or programming.

6. Device according to any of the preceding claims, **characterised in that** a diagnostic algorithm is provided in the sensor module (20) or in the signal processing device (18).

7. Device according to any of the preceding claim, **characterised in that** a set acceleration pattern of the movements of the fluidic component (11, 12) is stored in the signal processing device, and **in that** means are provided for comparing this set acceleration pattern to the measured acceleration pattern.

8. Device according to any of the preceding claim, **characterised in that** a closed-loop control unit is provided in the signal processing device (18) for the movement of the fluidic component (11, 12), which control unit is actively connected to a valve assembly (15) for applying a fluid to the fluidic component.

9. Device according to any of the preceding claim, **characterised in that** a voltage source providing the electric energy required for the operation of the sensor module (20) from the signal transmitted by the fixed station (17) or from the motion energy of the movable fluidic component (11, 12) is provided in the sensor module (20).

## Revendications

1. Dispositif de surveillance et/ou de réglage du mouvement d'un composant fluidique dans un système fluidique, doté d'un composant fluidique mobile (11, 12) et d'un capteur d'accélération (16) qui est disposé sur ou dans le composant fluidique mobile (11, 12) conçu sous la forme d'un piston ou d'une tige de piston d'un tube d'amortissement ou d'un vérin de travail, d'un dispositif de transmission de signaux sans fil qui sert à la transmission sans fil entre le capteur d'accélération (16) et une station fixe (17), et d'un dispositif de traitement de signaux (18) qui est relié à la station fixe (17) ou intégré dans cette dernière et qui est conçu pour le réglage et/ou la surveillance du déplacement du composant fluidique mobile (11, 12) en fonction des signaux du capteur d'accélération (16), **caractérisé en ce que** le capteur d'accélération est disposé conjointement à un microcontrôleur (21) en vue de la préparation et/ou de la numérisation des données du capteur dans un module de capteur (20).

2. Dispositif selon la revendication 1, **caractérisé en ce que** le capteur d'accélération (16) est disposé dans un module de capteur (20) conjointement avec un transducteur conçu en particulier sous la forme d'un élément de transpondeur en vue de la transmission de signaux et **en ce que** la station fixe (17) est conçue sous la forme d'un appareil de lecture ou d'un appareil de lecture/écriture, en particulier un appareil de lecture-transpondeur ou un appareil de lecture/écriture-transpondeur.

3. Dispositif selon la revendication 2, **caractérisé en ce que** le module de capteur (20) est vissé ou serré sur ou dans le composant fluidique mobile (11, 12).

4. Dispositif selon la revendication 3, **caractérisé en ce que** le module de capteur (20) est conçu sous la forme d'une vis ou est intégré dans une vis.

5. Dispositif selon l'une quelconque des revendications précédentes, **caractérisé en ce que** la station fixe (17) est conçue également pour la transmission de données au module de capteur (20), en particulier pour le paramétrage et/ou la programmation.

6. Dispositif selon l'une quelconque des revendications précédentes, **caractérisé en ce qu'**un algorithme de diagnostic est contenu dans le module de capteur (20) et/ou dans le dispositif de traitement de signaux (18).

7. Dispositif selon l'une quelconque des revendications précédentes, **caractérisé en ce qu'**une courbe d'accélération de référence des déplacements du composant fluidique (11, 12) est enregistrée dans le dispositif de traitement de signaux et **en ce que** sont prévus des moyens de comparaison de cette courbe d'accélération de référence avec la courbe d'accélération mesurée.

8. Dispositif selon l'une quelconque des revendications précédentes, **caractérisé en ce que** le dispositif de traitement de signaux (18) contient un dispositif de réglage pour le déplacement du composant fluidique (11, 12) qui est en liaison fonctionnelle avec un système de soupape (15) afin d'appliquer un fluide sur le composant fluidique.

9. Dispositif selon l'une quelconque des revendications précédentes, **caractérisé en ce que** le module de capteur (20) contient une source de tension acquérant l'énergie électrique nécessaire à son fonctionnement à partir des signaux transmis par la station fixe (17) ou à partir de l'énergie de déplacement du composant fluidique mobile (11, 12).
